# EUROPÄISCHE PATENTSCHRIFT

(11) **EP 1 283 580 B1**
(45) Veröffentlichungstag und Bekanntmachung des Hinweises auf die Patenterteilung: **14.11.2007**
(21) Anmeldenummer: 02017230.0
(22) Anmeldetag: 31.07.2002
(51) Int. Cl.: H02J 7/00, G01R 31/36, F02N 11/04, H02J 7/14

(54) **Symmetrierschaltung, Verfahren zur Spannungssymmetrierung sowie Antriebssystem für ein Kraftfahrzeug**
Balancing circuit, method of voltage balancing and drive system for a vehicle
Circuit de symmetrization, procédé de symmetrization de tension et système d'entraînement pour un véhicule

(30) Priorität: 08.08.2001 DE 10138983
(43) Veröffentlichungstag der Anmeldung: 12.02.2003
(73) Patentinhaber: TEMIC Automotive Electric Motors GmbH, 10553 Berlin (DE)
(72) Erfinder: Ridder, Matthias, 86859 Igling (DE)
(74) Vertreter: Pröll, Jürgen

(56) Entgegenhaltungen:
- EP-A- 0 432 639
- US-A- 4 684 814
- SCHMIDT H ET AL: "THE CHARGE EQUALIZER A NEW SYSTEM TO EXTEND BATTERY LIFETIME IN PHOTOVOLTAIC SYSTEMS, U.P.S. AND ELECTRIC VEHICLES" INTERNATIONAL TELECOMMUNICATIONS ENERGY CONFERENCE. (INTELEC). PARIS, SEPT. 27 - 30, 1993, NEW YORK, IEEE, US, Bd. 2 CONF. 15, 27. September 1993 (1993-09-27), Seiten 146-151, XP000496211
- KUTKUT N H ET AL: "Dynamic equalization techniques for series battery stacks" TELECOMMUNICATIONS ENERGY CONFERENCE, 1996. INTELEC '96., 18TH INTERNATIONAL BOSTON, MA, USA 6-10 OCT. 1996, NEW YORK, NY, USA,IEEE, US, 6. Oktober 1996 (1996-10-06), Seiten 514-521, XP010204362 ISBN: 0-7803-3507-4

## Beschreibung

Die Erfindung betrifft ein Antriebssystem für ein Kraftfahrzeug, welches eine Energiespeicheranordnung mit einer Symmetrierschaltung aufweist sowie ein entsprechendes Verfahren zur Spannungssymmetrierung.

Für die Energiespeicherung in Systemen, in denen kurzzeitig hohe elektrische Ströme verlangt werden, kommen in zunehmendem Maße Energiespeicher mit hoher Energiedichte, wie Kondensatoren oder sog. Ultrakapazitäten zum Einsatz. Diese Energiespeicher können relativ zur gespeicherten Energiemenge hohe Ströme liefern, allerdings ist ihre Ladespannung im Allgemeinen gering (z. B. rund 2 Volt bei Ultrakapazitäten). Um mit derartigen Energiespeichern eine hohe Gesamtspannung (z. B. 42 Volt) zu erreichen, wird i. a. eine Vielzahl derartiger Energiespeicher (z .B. ungefähr 20 Energiespeicher) in Reihe geschaltet.

Beispielsweise ist der Einsatz von Ultrakapazitäten, auch UltraCaps genannt, bei Kraftfahrzeugen mit einem sog. Kurbelwellenstarter-Generator vorgeschlagen worden (siehe z. B. Dietrich: UltraCaps - Power für innovative Automobil-Applikationen, in A. Krappel (Hrsg.): Kurbelwellenstartergenerator (KSG) - Basis für zukünftige Fahrzeugkonzepte, 2. Auflage, Expert-Verlag 2000, S. 207-207). Bei diesen Ultrakapazitäten handelt es sich um Doppelschichtkondensatoren. Ein hieraus aufgebautes Energiespeicherpaket liefert dem Kurbelwellenstarter-Generator Energie für das Starten des Verbrennungsmotors oder für eine Booster-Funktion, bei welcher die elektrische Maschine den Verbrennungsmotor bei Fahrzeugbeschleunigungsvorgängen unterstützt (siehe 2.6. B. Dietrich, S. 204).

Man hat nun festgestellt, dass es innerhalb solcher Reihenschaltungen von Energiespeichern zu unsymmetrischen Ladungszuständen kommen kann. Beispielsweise können nach längerer Lagerung eines aufgeladenen Kondensatorpakets die Ladespannungen der einzelnen Kondensatoren um bis zu 1 Volt unterschiedlich sein. Ein solcher unsymmetrischer Ladezustand kann auch bei Entladung des gesamten Speicherpakets erhalten bleiben - unter Umständen kann es dann sogar zu negativen Spannungen an einzelnen Kondensatoren kommen.

Zur Vermeidung solcher asymmetrischer Ladezustände ist es bekannt, ein Energiespeicherpaket mit einer Symmetrierschaltung auszurüsten (siehe z. B. T. Dietrich, S. 203). Hiermit werden die Ladespannungen gelegentlich aneinander angepasst, d.h. symmetriert.

Aus dem Konferenzbeitrag "THE CHARGE EQUALIZER - A NEW SYSTEM TO EXTEND BATTERY LIFETIME IN PHOTOVOLTAIC SYSTEMS, U. P. S. AND ELECTRIC VEHICLES" (1993) von H. Schmidt ist eine Symmetrierschaltung für Batteriezellen bekannt, wobei die Symmetrierung jederzeit durchführbar ist, d. h. sowohl beim Laden als auch beim Entladen der Batterien. Dabei wird Energie aus Batteriezellen mit höherer Spannung in Batteriezellen mit niederer Ladung, oder umgekehrt (um hier eine Überladung einzelner Zellen zu vermeiden), transferiert. Die Symmetrierung wird einerseits dadurch erreicht, dass zu den einzelnen Zellen Kondensatoren parallel geschalten werden. Weisen Batteriezelle und zugehöriger Kondensator unterschiedliche Spannungen auf, erfolgt ein Spannungsausgleich, wobei der Batteriezelle entweder Energie entnommen oder zugeführt wird. Alternativ kann eine Symmetrierung, insbesondere für hohe Symmetrierströme, durch einen Spannungswandler erfolgen, wobei Energie dem gesamten Batteriesystem entnommen und dann einzelnen Zellen, mit vorzugsweiser niederer Spannung, zugeführt wird. Diese Symmetrierschaltung ist für photovoltaische Systeme, nicht zu unterbrechende Versorgungssysteme oder elektrische Fahrzeuge ausgelegt.

Aus der US-Patentschrift 5,998,969 ist beispielsweise eine Symmetrierschaltung für in Reihe geschaltete Energiespeicher, und zwar Kondensatoren bekannt, bei welcher diejenigen Energiespeicher, die eine über einem Grenzwert liegende Spannung aufweisen, über einen jeweils parallel geschalteten Widerstand teilweise entladen werden. Die überschüssige Energie wird also in Wärme umgewandelt.

In der EP 1 056 182 A2 wird eine Batterieangleichungsschaltung für zwei in Reihe geschaltete Batterien vorgeschlagen. Die Schaltung weist einen Resonanzkreis auf, welcher abwechselnd zur ersten und zweiten Batterie parallel geschaltet wird. Im Ergebnis fließt eine spannungsangleichende Gleichstromkomponente durch den Resonanzkreis zwischen der ersten und der zweiten Batterie, als Funktion des Ladespannungsunterschieds zwischen den beiden Batterien.

Die Erfindung stellt nach Anspruch 1 ein Antriebssystem für ein Kraftfahrzeug mit Verbrennungsmotor bereit, welches folgendes aufweist: eine elektrische Kurbelwellenmaschine, eine Anordnung in Reihe geschalteter Energiespeicher (im Folgenden auch "Speicherpaket" genannt), die zur Speisung der elektrischen Kurbelwellenmaschine dient und eine Symmetrierschaltung. Die Symmetrierschaltung umfasst Aufwärts-Spannungswandler, die den Energiespeichern zugeordnet sind. Die Aufwärts-Spannungswandler sind so geschaltet, dass sie dem zugeordneten Energiespeicher, wenn eine Spannungssymmetrierung durchgeführt wird, Energie entnehmen und unter Spannungshochsetzung der Reihenschaltung der Energiespeicher zuführen. Ferner stellt die Erfindung ein Verfahren zur Spannungssymmetrierung in einem Antriebssystem bereit.

Die Erfindung wird nun anhand von bevorzugten beispielhaften Ausführungsformen und der angefügten beispielhaften Zeichnung näher erläutert. In der Zeichnung zeigen:
- Fig. 1: ein Speicherpaket mit einer Symmetrierschaltung;
- Fig. 2: ein Diagramm von Spannungswerten einzelner Energiespeicher des Speicherpakets von Fig. 1 vor und nach einer Spannungssymmetrierung gemäß einer ersten Ausführungsform;
- Fig. 3: ein Diagramm von Spannungswerten einzelner Energiespeicher des Speicherpakets von Fig. 1 vor und nach einer Spannungssymmetrierung gemäß einer zweiten Ausführungsform;
- Fig. 4: ein Flussdiagramm zur Veranschaulichung eines Verfahrens zur Symmetrierung eines Speicherpakets gemäß Fig. 2;
- Fig. 5: eine schematisch vereinfachte Darstellung eines Kraftfahrzeugantriebssystems mit einem Kurbelwellenstarter-Generator und einem Energiespeicherpaket mit Symmetrierschaltung gemäß Fig. 1.

In den Figuren sind funktionsgleiche oder -ähnliche Teile zum Teil mit gleichen Bezugszeichen gekennzeichnet.

Bevor die Figuren näher erläutert werden, folgen zunächst einige Anmerkungen zu den bevorzugten Ausführungsformen.

Bei den bevorzugten Ausführungsformen sind die Aufwärts-Spannungswandler getaktete Spannungswandler. Ein solcher getakteter Spannungswandler weist i. a. einen Leistungsschalter und eine Induktivität auf. Solange der Leistungsschalter geschlossen ist, wird Energie in die Induktivität gespeichert. Wenn der Schalter geöffnet wird, wird die gespeicherte Energie unter Spannungshochsetzung an den Ausgang - hier die Reihenschaltung der Energiespeicher - abgegeben. Vorteilhaft handelt es sich bei dem Spannungswandler um einen sog. Sperrwandler. Hierunter versteht man einen Wandler, bei dem, solange Energie in die Induktivität eingespeichert wird (also der Leistungsschalter geschlossen ist), keine Energie an den Ausgang geliefert wird; also keine Nachladung der Reihenschaltung der Energiespeicher erfolgt. Zwecks galvanischer Trennung zwischen dem einzelnen Energiespeicher und der Energiespeicher-Reihenschaltung ist der Ausgang des Spannungswandlers vorteilhaft mit Hilfe eines Transformators von dem zugehörigen Energiespeicher und dem Leistungsschalter entkoppelt. Der Transformator kann hierfür ein Übersetzungsverhältnis von Eins haben, er kann aber auch zusätzlich der Spannungsüber- oder - Untersetzung dienen. Bei der bevorzugten Ausführungsform dient der Transformator gleichzeitig als die Speicherinduktivität. Bei anderen (nicht gezeigten) Ausführungsformen kann hingegen zur Energiespeicherung eine separate Speicherdrossel vorgesehen sein.

Bei den bevorzugten Ausführungsformen sind die einzelnen Aufwärts-Spannungswandler zur Rückspeisung der entnommenen Energie parallel an die Reihenschaltung der Energiespeicher geschaltet.

Eine Verwendung der Symmetrierschaltung erfolgt bei einem Kraftfahrzeug mit Verbrennungsmotor, welches mit einer auf der Antriebswelle des Verbrennungsmotors sitzenden elektrischen Maschine gekoppelt ist, sich also über den gesamten Drehzahlbereich des Verbrennungsmotors mitdreht. Eine derartige Kurbelwellenmaschine kann die Funktion des herkömmlichen Starters übernehmen und/oder den Verbrennungsmotor bei Fahrzeugbeschleunigung durch Drehmomentzugabe unterstützen (sog. Boosterfunktion). Sofern ein solcher Kurbelwellenstarter auch die Funktion eines Generators hat, wird er auch als "Kurbelwellenstarter-Generator" bezeichnet. Für die Start- und Boosterfunktion sind kurzzeitig hohe elektrische Leistungen aufzubringen, wofür eine Reihenschaltung von Energiespeichern, insbesondere von Ultrakapazitäten, mit der bevorzugten Symmetrierschaltung vorteilhaft ist.

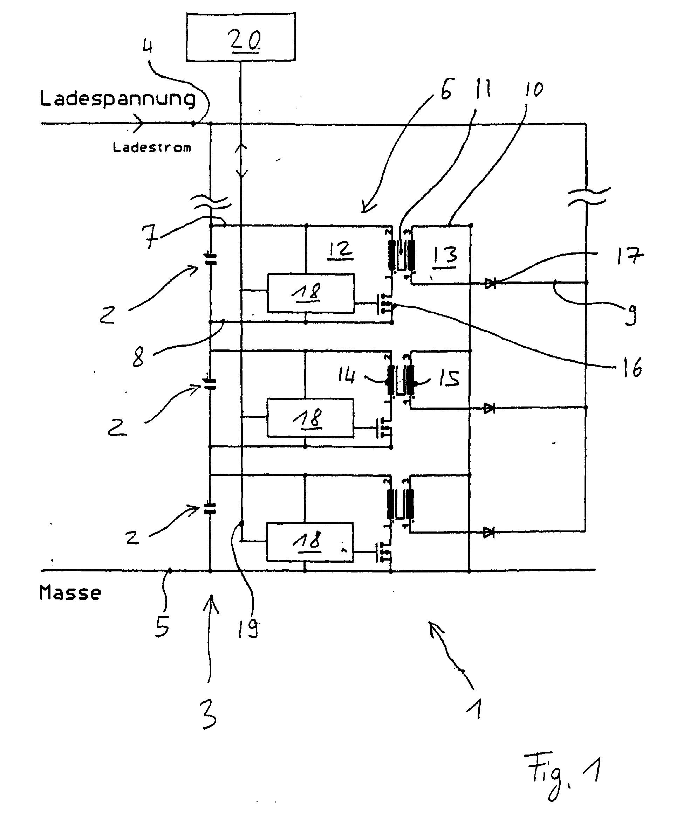

Nun zurückkehrend zu Fig. 1, ist dort eine Symmetrierschaltung 1 für mehrere, in Reihe geschaltete Energiespeicher 2 dargestellt. Die Reihenschaltung der Energiespeicher 2 bildet ein Speicherpaket 3. Bei den Energiespeichern 2 handelt es sich in der vorliegenden Ausführungsform um Ultrakapazitäten in Form von Doppelschichtkondensatoren. Jeder Energiespeicher 2 hat beispielsweise eine Betriebsspannung von 2,3 V. Zur Erzielung einer Betriebsspannung des Speicherpakets von ungefähr 42 V sind daher 18 bis 19 Energiespeicher 2 in Reihe geschaltet. Das Speicherpaket 3 hat zwei Verbindungen nach außen, nämlich eine Plusverbindung 4 und eine Verbindung zur Masse 5. Über die Verbindungen 4 und 5 fließen die Ströme, mit denen das Speicherpaket von außen geladen bzw. nach außen entladen wird. Die Symmetrierschaltung 1 ist aus einzelnen Symmetriereinheiten 6 (Aufwärts-Spannungswandlern) aufgebaut, wobei jedem Energiespeicher 2 eine derartige Symmetriereinheit 6 zugeordnet ist. Die Symmetriereinheiten 6 haben jeweils zwei Eingänge 7, 8 und zwei Ausgänge 9,10. Von den Eingängen 7, 8 ist jeweils einer (7) elektrisch mit der Plusklemme und der andere (8) mit der Minusklemme des zugeordneten Speichers 2 verbunden. Von den Ausgängen 9,10 ist der auf höherem Potential liegende Ausgang 9 jeweils mit der Plusverbindung 4 des Speicherpakets 3 und der auf niedrigerem Potential liegende Ausgang 10 mit der Masse 5 verbunden. Die Symmetriereinheiten 6 sind also ausgangsseitig parallel mit dem Speicherpaket 3 verbunden.

Die Symmetriereinheiten 6 weisen jeweils einen Transformator 11 auf, welcher die Symmetriereinheiten 6 in einen Primärteil 12 mit den Eingängen 7, 8 und einen Sekundärteil 13 mit den Ausgängen 9,10 unterteilt. Der Transformator 11 hat ein Übersetzungsverhältnis von Eins. Bei dem in Fig. 1 gezeigten Beispiel besitzen Primärwicklung 14 und Sekundärwicklung 1 5 unterschiedliche Polung, so dass sich primär- und sekundärseitig jeweils hohe und tiefe Spannungsniveaus gegenüberliegen.

Der Primärteil 12 der Symmetriereinheiten 6 wird durch eine Reihenschaltung der Primärwicklung 14 und eines Leistungsschalters 16 gebildet, bei dem es sich beispielsweise um einen Bipolar- oder Feldeffektleistungstransistor (hier: einen Leistungsmosfet) handelt, gebildet. Der Sekundärteil 13 wird durch eine Reihenschaltung der Sekundärwicklung 15 und einer Diode 17 gebildet, welche Strom zur Plusverbindung 4 des Speicherpakets 3 durchlässt. Die Symmetriereinheit 6 weist außerdem eine Steuereinheit 18 auf, welche die Schaltsignale für den Leistungsschalter 16 liefert. Sie ist in der in Fig. 1 gezeigten Ausführungsform mit den Eingängen 7 und 8 verbunden, um die Spannung des jeweiligen Energiespeichers 2 messen zu können.

Die Symmetriereinheiten 6 funktionieren folgendermaßen: Wenn die Spannung eines Energiespeichers 2 verringert werden soll, veranlasst die Steuereinheit 18, dass der Leistungsschalter 16 getaktet wird. Wenn der Schalter geschlossen ist, fließt im Primärteil 12 Strom, so dass Energie in den Transformator 11 eingespeichert wird. Wenn der Schalter geöffnet wird, wird die eingespeicherte Energie sekundärseitig abgegeben, wobei die Diode 17 leitend wird und sich am Ausgang 9, 10 eine Spannung einstellt, die größer als die Spannung des Speicherpakets 3 ist. Somit wird die dem einzelnen Energiespeicher 2 entnommene Energie - abgesehen von den relativ kleinen Verlusten der Symmetrierschaltung- nach Spannungshochsetzung wieder in das Speicherpaket 3 eingespeist. Insgesamt bilden die Symmetriereinheiten 6 also primär getaktete Sperrwandler.

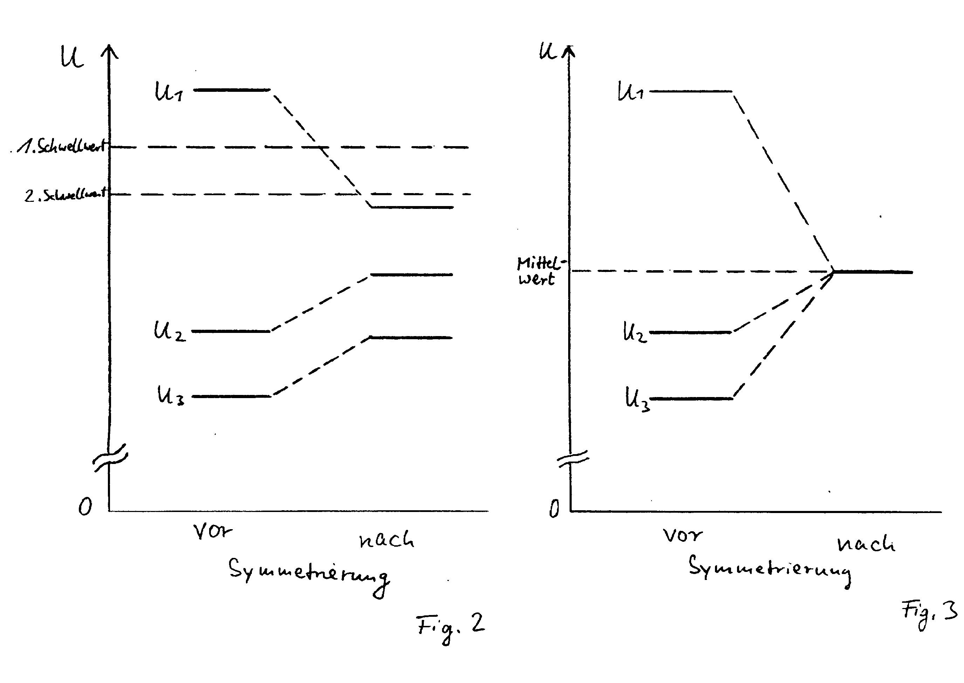

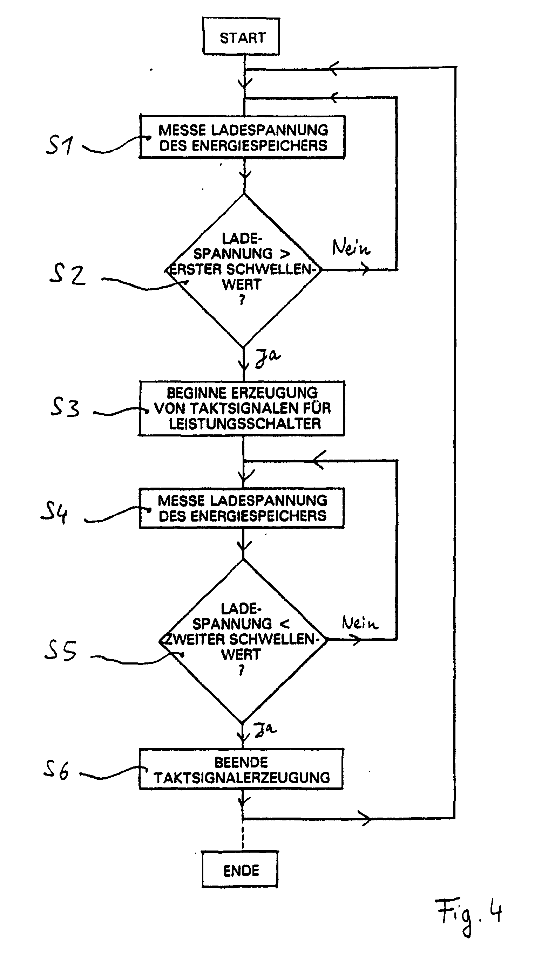

Die einzelnen Steuereinheiten 18 sind bei einigen Ausführungsformen über Steuerleitungen 19 mit einem Speicherpaket-Steuergerät 20 verbunden. Bei der in Fig. 2 und 4 näher erläuterten Ausführungsform arbeiten die einzelnen Symmetriereinheiten 6 autonom, so dass dort die Steuerleitungen 19 und das Steuergerät 20 entfallen können. Gleichwohl kann auch bei der autonomen Arbeitsweise gemäß Fig. 2 und 4 ein übergeordnetes Steuergerät sinnvoll sein, z. B. zum Ein- und Ausschalten des autonomen Betriebs, zum Setzen von Spannungsschwellen, zum Protokollieren und Testen, etc. Bei anderen Ausführungsformen sorgt das Steuergerät 20 für eine zentrale Steuerung der einzelnen Symmetriereinheiten 6 (Beispiele hierfür sind unten im Zusammenhang mit Fig. 3 angegeben).

Fig. 2 veranschaulicht die Spannungsverhältnisse bei einer ersten Ausführungsform mit autonomer Steuerung der Symmetrierung. Bei dieser ersten Ausführungsform wird jeweils nur demjenigen Energiespeicher 2 Energie entnommen, dessen Ladespannung über einem vorbestimmten ersten Schwellenwert liegt. Hierzu vergleicht jede Steuereinheit 18 laufend die Ladespannung des jeweils zugeordneten Energiespeichers 2 mit dem vorgegebenen ersten Schwellenwert. Liegt die Ladespannung unter dem ersten Schwellwert, hält die Steuereinheit 18 den jeweiligen Leistungsschalter 16 dauernd geöffnet. Es fließt dann kein Strom durch die Primärwicklung 14 des zugehörigen Transformators 11, so dass dem jeweiligen Energiespeicher 2 keine Energie entnommen wird. Liegt die gemessene Ladespannung jedoch über dem ersten Schwellenwert, so steuert die Steuerschaltung 18 den Leistungsschalter 16 mit Taktsignalen an, wodurch es zur Energieentnahme aus dem betreffenden Energiespeicher 2 kommt. Unterschreitet daraufhin die Ladespannung des Energiespeichers 2 einen vorgegebenen zweiten Schwellenwert (der tiefer als der erste liegt), so beendet sie wieder das Takten des Leistungsschalters 16. Selbstverständlich können die Steuereinheiten 18 in einem Steuergerät zusammengefasst und von diesem seriell bearbeitet werden, z. B. in einem Mikrorechner, der sich nach außen so wie die einzelnen Steuereinheiten 18 verhält.

In Fig. 2 sind beispielhaft die Ladespannungen U₁, U₂ und U₃ dreier Energiespeicher 2 vor der Symmetrierung dargestellt. Eine der drei Spannungen, nämlich U₁, liegt oberhalb des ersten Schwellenwerts, die anderen, U₂ und U₃, liegen unterhalb. Durch die Energieentnahme aus dem über dem ersten Schwellenwert liegenden Energiespeichers sinkt die Spannung U₁, ab, bis sie unter dem zweiten Schwellenwert zu liegen kommt, woraufhin die Energieentnahme aus diesem Energiespeicher beendet wird. Durch die Einspeisung der dem besagten Energiespeicher entnommenen Energie in das gesamte Speicherpaket 3 steigen die Spannungen U₂ und U₃ der anderen beiden Energiespeicher an.

Eine zweite bevorzugte Ausführungsform der Symmetrierungssteuerung, die i. a. zentral gesteuert abläuft, ist in Fig. 3 veranschaulicht. Hier wird allen Energiespeichern 2 des Speicherpakets 3 (oder einer Untergruppe hiervon) Energie entnommen. Dabei ist die Menge der pro Zeiteinheit entnommenen Ladung beispielsweise proportional zur Ladespannung. Als Folge hiervon wird bei den in Fig. 3 dargestellten Spannungswerten dem Energiespeicher 2 mit der höchsten Spannung U₁ am meisten Ladung entnommen, und den beiden anderen Energiespeichern mit den geringeren Spannungen U₂ und U₃ entsprechend weniger Ladung. Da bei der Rückführung der entnommenen Energie in das Speicherpaket 3 allen Energiespeichern 2 gleich viel Ladung zugeführt wird, enthält der Energiespeicher mit der Spannung U₁ weniger Ladung, als er abgibt; die Spannung U₁ fällt folglich ab. Die Energiespeicher mit den Spannungen U₂ und U₃ erhalten jedoch mehr Ladung als sie abgeben, die Spannungen U₂ und U₃ steigen also folglich an. Nach ausreichend langer Zeit gleichen sich alle Spannungen an einen Spannungsmittelwert an. Die Spannungssymmetrierung gemäß der zweiten Ausführungsform kann permanent, zeitlich intermittierend oder beispielsweise in Abhängigkeit von einem Aufladen oder Entladen des Speicherpakets 3 von bzw. nach außen durchgeführt werden, unabhängig davon, ob einer der Energiespeicher 2 eine überhöhte Spannung aufweist. In diesen Fällen brauchen die Spannungen der einzelnen Energiespeicher 2 nicht detektiert zu werden. Bei anderen (nicht gezeigten) Ausführungsformen erzeugt das übergeordnete Steuergerät 20 direkt die Taktsignale für die Leistungsschalter 16 erzeugt, so dass die den jeweiligen Energiespeichern 2 zugeordneten Steuereinheiten 18 entfallen können. Eine weitere Möglichkeit der Auslösung der Symmetrierung gemäß der zweiten Ausführungsform liegt darin, dass die Spannungen der einzelnen Energiespeicher 2 gemessen werden und dass, wenn bei einem von diesem eine Überspannung gemessen wird, sämtlichen Energiespeichern Energie gemäl3 Fig. 3 entnommen wird (und nicht etwa nur dem Energiespeicher mit Überspannung, wie bei der ersten Ausführungsform gemäß Fig. 2). Das Auftreten einer Überspannung bei einer Steuereinheit 18 veranlasst also die Erzeugung von Taktsignalen bei allen Steuereinheiten 18.

Fig. 4 zeigt ein Flussdiagramm des Spannungssymmetrierverfahrens gemäß der Ausführungsform von Fig. 2. Das gezeigte Verfahren wird von jeder der Steuerschaltungen 18 autonom und unabhängig von den übrigen Steuerschaltungen 18 fortlaufend durchgeführt. Im Schritt S1 misst die betrachtete Steuerschaltung 18 die Ladespannung des zugeordneten Energiespeichers 2. Im Schritt S2 prüft die Steuerschaltung 18, ob die gemessene Ladespannung größer als der in Fig. 2 gezeigte erste Schwellenwert ist. Falls dies nicht zutrifft, also der Energiespeicher 2 keine Überspannung aufweist, findet ein Rücksprung vor den Schritt S1 statt. Die Schritte S1 und S2 werden also fortlaufend hintereinander ausgeführt, solange keine Überspannung vorliegt. Wird hingegen im Schritt S2 eine solche Überspannung festgestellt, beginnt die Steuerschaltung 18 im Schritt S3 die Erzeugung von Taktsignalen für den Leistungsschalter 16. Wie im Zusammenhang mit Fig. 2 erläutert wurde, führt die Taktung des Leistungsschalters 16 zu einem allmählichen Abbau der Überspannung. Im Schritt S4 misst die Steuerschaltung 16 wiederum die Ladespannung des Energiespeichers 2. Im Schritt S5 wird geprüft, ob die Ladespannung nun bereits den in Fig. 2 gezeigten zweiten Schwellenwert unterschritten hat. Ist dies noch nicht der Fall, springt der Verfahrensablauf zurück vor den Schritt S4. Die Schritte S4 und S5 werden also solange nacheinander ausgeführt, bis die Überspannung in ausreichendem Maße abgebaut ist. Wird im Schritt S5 nun festgestellt, dass die Ladespannung bereits den zweiten Schwellenwert unterschritten hat, beendet die Steuerschaltung 18 im Schritt S6 die Taktsignalerzeugung. Somit wird dem Energiespeicher 2 keine weitere Energie entnommen. Sofern nur eine einmalige Spannungssymmetrierung gewünscht ist, endet das Verfahren an dieser Stelle. Im praktischen Betrieb findet aber hier ein Rücksprung vor den Schritt S1 statt, damit bei einem möglichen neuerlichen Auftreten einer Überspannung diese wiederum festgestellt und eine neuerliche Spannungssymmetrierung durchgeführt werden kann.

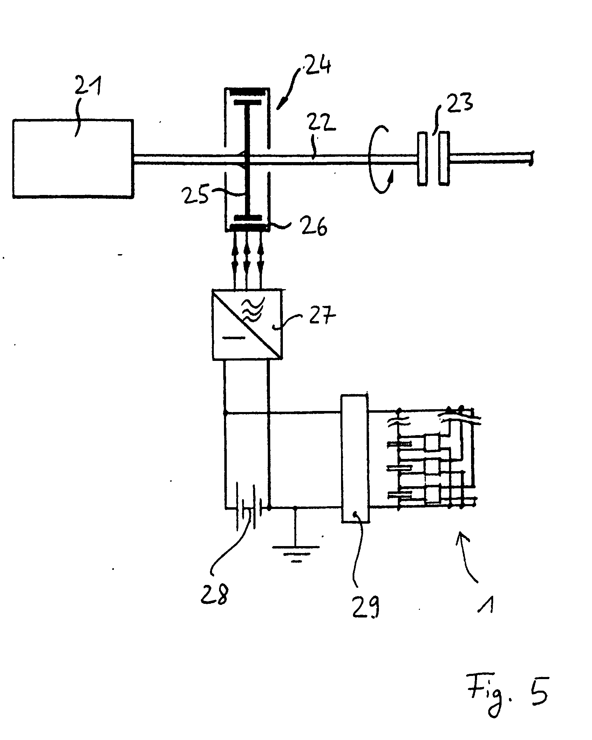

Fig. 5 veranschaulicht ein Kraftfahrzeug-Antriebssystem mit einem Speicherpaket 3 und einer Symmetrierschaltung 1 gemäß Fig. 1. Das Antriebssystem weist einen Verbrennungsmotor 21 auf, der Drehmoment über eine Antriebswelle 22 (z. B. die Kurbelwelle des Verbrennungsmotors 21), eine Kupplung 23 und weitere (nicht gezeigte) Teile eines Antriebsstrangs auf die Antriebsräder des Fahrzeugs abgibt. Auf der Antriebswelle 22 sitzt eine als Starter und/oder Booster und ggf. als Generator arbeitende elektrische Maschine 24, hier eine Drehstrom-Asynchronmaschine oder eine z. B. mit Permanentmagneten ausgerüstete Drehstrom-Synchronmaschine. Sie weist einen direkt auf der Antriebswelle 22 sitzenden und drehfest mit ihr verbundenen Läufer 25 sowie einen z. B. am Gehäuse des Verbrennungsmotors 21 abgestützten Ständer 26 auf. Die elektrische Maschine 24 und der Verbrennungsmotor 21 laufen permanent zusammen; das Starten des Verbrennungsmotors 21 und/oder die Boostfunktion erfolgen direkt und ohne Übersetzung. Die (hier nicht dargestellte) Wicklung des Ständers 26 wird durch einen Wechselrichter 27 mit elektrischen Strömen und Spannungen frei einstellbarer Amplitude, Phase und Frequenz gespeist. Der Wechselrichter 27 erzeugt diese Ströme und Spannungen aus einem Gleichspannungs-Eingangskreis, indem eine herkömmliche Langzeitbatterie 28 (z. B. ein Blei-Schwefelsäure-Akkumulator z. B. mit 42 V Betriebsspannung) angeordnet ist. Mit dem Eingangskreis ist auch das Speicherpaket 3 mit der Symmetrierschaltung 1 verbunden, und zwar über ein Lade/ Entladesteuergerät 29, welches auch die Funktion des Steuergeräts 20 in Fig. 1 übernimmt. Das Speicherpaket 3 ist, wie in Fig. 1 näher gezeigt wurde, aus in Reihe geschalteten Energiespeichern 2 mit jeweils zugeordneten Symmetriereinheiten 6 aufgebaut. Wenn die elektrische Maschine 24 kurzzeitig einen hohen elektrischen Leistungsbedarf hat, etwa zum Direktstarten des Verbrennungsmotors 21 oder zur Drehmomentzugabe bei Fahrzeugbeschleunigung (Boost-Funktion), wird dem Speicherpaket 3 kurzzeitig hohe elektrische Leistung entnommen und der elektrischen Maschine 24 über den Wechselrichter 27 zugeführt. Das Nachladen des Speicherpakets 3 erfolgt während des laufenden Betriebs, z. B. wenn die elektrische Maschine 24 generatorisch arbeitet. Sollte das Speicherpaket 3 nach einem längeren Fahrzeugstillstand entladen sein, so kann es vor dem Startvorgang aus der Langzeitbatterie 28 aufgeladen werden, Das Symmetrieren des Speicherpakets 3 erfolgt nach einer der Ausführungsformen der Fig. 2 bis 4.

Die bevorzugten Ausführungsformen erlauben die Ladungssymmetrierung von Speicherpaketen mit hohem Gesamtwirkungsgrad. Da die Verlustleistung gering ist, können relativ hohe Symmetrierströme gewählt werden, so dass der eigentliche Symmetrierungsvorgang nur relativ kurze Zeit erfordert; außerdem kann hierdurch der Leistungsteil der Symmetrierschaltung relativ klein dimensioniert werden.

## Patentansprüche

1. Antriebssystem für ein Kraftfahrzeug umfassend
einen Verbrennungsmotor (21),
einen elektrischen Kurbelwellen-Starter-Generator (24) und
eine Reihenschaltung von Energiespeichern (2), die ein Speicherpaket (3) bilden und zur Speisung des elektrischen Kurbelwellen-Starter-Generators (24) dienen, wobei jedem Energiespeicher (2) eine Symmetriereinheit (6) zugeordnet ist, die jeweils einen Aufwärts-Spannungswandlerumfasst, und welche Symmetriereinheiten zusammen eine Symmetrierschaltung (1) zur Spannungssymmetrierung der Energiespeicher (2) bilden, und
die Symmetriereinheiten (6) so geschaltet sind, dass sie dem zugeordneten Energiespeicher (2), wenn eine Spannungssymmetrierung durchgeführt wird, Energie entnehmen und sie unter Spannungshochsetzung der Reihenschaltung der Energiespeicher (2) zuführen, und wobei
die Energiespeicher (2) Kondensatoren und/oder Ultrakapazitäten sind.

2. Antriebssystem nach Anspruch 1,
**dadurch gekennzeichnet, dass**
die Symmetrierschaltung (1) Steuereinheiten (18) aufweist, die veranlassen, dass die Energieentnahme bei denjenigen Energiespeichern (2) erfolgt, deren Spannung einen Schwellenwert überschreitet.

3. Antriebssystem nach Anspruch 1 oder 2,
**dadurch gekennzeichnet, dass**
die Symmetrierschaltung (1) so eingerichtet ist, dass eine Entnahme von Energie aus mehreren, insbesondere allen, Energiespeichern (2) erfolgt, wobei die Symmetrierung **dadurch** erzielt wird, dass Energiespeichern (2) mit höherer Spannung mehr Ladung entnommen wird als solchen mit niedrigerer Spannung.

4. Antriebssystem nach einem der Ansprüche 1 bis 3,
**dadurch gekennzeichnet, dass**
die Reihenschaltung der Symmetrierschaltung (1) mehr als zwei Energiespeicher (2) umfasst.

5. Antriebssystem nach einem der Ansprüche 1 bis 4,
**dadurch gekennzeichnet, dass**
die Aufwärts-Spannungswandler (6) getaktete Spannungswandler, insbesondere Sperrwandler, sind.

6. Antriebssystem nach einem der Ansprüche 1 bis 5,
**dadurch gekennzeichnet, dass**
die Aufwärts-Spannungswandler (6) parallel geschaltet sind.

7. Verfahren zur Symmetrierung der Spannung mehrerer, in Reihe geschalteter Energiespeicher (2) in einem Antriebssystem eines Kraftfahrzeuges,
wobei den Energiespeichern (2), die als Kondensatoren und/oder Ultrakapazitäten ausgebildet sind, Aufwärts-Spannungswandler (6) zugeordnet sind, welche den Energiespeichern (2), wenn eine Spannungssymmetrierung durchgeführt wird, Energie entnehmen und unter Spannungshochsetzung der Reihenschaltung der Energiespeicher (2) zuführen.

8. Verfahren nach Anspruch 7,
**dadurch gekennzeichnet, dass**
denjenigen Energiespeichern (2) Energie entnommen wird, deren Spannung einen Schwellenwert überschreitet.

9. Verfahren nach Anspruch 7 oder 8,
**dadurch gekennzeichnet, dass**
eine Entnahme von Energie aus mehreren, insbesondere allen, Energiespeichern (2) erfolgt, auch wenn diese keine überhöhte Spannung haben, wobei die Symmetrierung **dadurch** erzielt wird, dass Energiespeichern (2) mit höherer Spannung mehr Energie entnommen wird als solchen mit niedrigerer Spannung.

10. Verfahren nach einem der Ansprüche 7 bis 9,
**dadurch gekennzeichnet, dass**
in die Symmetrierung mehr als zwei Energiespeicher (2) einbezogen sind.

11. Verfahren nach einem der Ansprüche 7 bis 11,
**dadurch gekennzeichnet, dass**
für die Aufwärts-Spannungswandler (6) getaktete Spannungswandler, insbesondere Sperrwandler, verwendet werden.

12. Verfahren nach einem der Ansprüche 7 bis 12,
**dadurch gekennzeichnet, dass**
die Aufwärts-Spannungswandler (6) in Parallelschaltung betrieben werden.

## Claims

1. A drive system for a vehicle comprising
a combustion engine (21),
an electric crankshaft starter generator (24) and
a series connection of power storages (2), which form a storage packet (3) and serve to feed the electric crankshaft starter generator (24), whereby each power storage (2) is assigned a circuit balancing unit (6) which in each case comprises a booster voltage transducer, and which circuit balancing units together form a balancing circuit (1) for voltage balancing of the power storages (2),
and the circuit balancing units (6) are connected such that they draw power from the assigned power storages (2), if voltage balancing is performed, and forward it to the series connection of power storages (2) in boosting voltage, and whereby
the power storages (2) are condensers and/or ultracapacitors.

2. The drive system as claimed in Claim 1,
**characterised in that**
the balancing circuit (1) has control units (18) which cause power drawdown from those power storages (2) whereof the voltage exceeds a threshold value.

3. The drive system as claimed in Claim 1 or 2,
**characterised in that**
the balancing circuit (1) is set up such that power is drawn from several, in particular all, power storages (2), whereby circuit balancing is attained by more load being taken from power storages (2) with higher voltage than those with lower voltage.

4. The drive system as claimed in any one of Claims 1 to 3,
**characterised in that**
the series connection of the balancing circuit (1) includes more than two power storages (2).

5. The drive system as claimed in any one of Claims 1 to 4,
**characterised in that**
the booster voltage transducers (6) are clocked voltage transducers, in particular blocking oscillators.

6. The drive system as claimed in any one of Claims 1 to 5,
**characterised in that**
the booster voltage transducers (6) are connected in parallel.

7. A process for circuit balancing the voltage of several power storages (2) connected in series in a drive system of a vehicle,
whereby the power storages (2), designed as condensers and/or ultracapacitors, are assigned booster voltage transducers (6) which take power from the power storages (2), whenever voltage balancing is performed, and forward it to the series connection of the power storages (2) in boosting voltage.

8. The process as claimed in Claim 7,
**characterised in that**
power is drawn from those power storages (2) whereof the voltage exceeds a threshold value.

9. The process as claimed in Claim 7 or 8,
**characterised in that**
power is taken from several, in particular all, power storages (2), even if they have no excessive voltage, whereby circuit balancing is attained by more power being drawn from power storages (2) with high voltage than those with low voltage.

10. The process as claimed in any one of Claims 7 to 9,
**characterised in that**
more than two power storages (2) are included in the circuit balancing.

11. The process as claimed in any one of Claims 7 to 11,
**characterised in that**
clocked voltage transducers, in particular blocking oscillators, are used for the booster voltage transducers (6).

12. The process as claimed in any one of Claims 7 to 12,
**characterised in that**
the booster voltage transducers (6) are operated connected in parallel.

## Revendications

1. Système d'entraînement pour un véhicule comprenant
un moteur à explosion (21),
un générateur de démarreur de vilebrequin (24) électrique et
un montage en série d'accumulateurs d'énergie (2), lesquels forment un ensemble d'accumulateurs (3) et servent à l'alimentation du générateur de démarreur de vilebrequin (24) électrique, une unité d'équilibrage (6) étant attribuée à chaque accumulateur d'énergie (2), laquelle comprend respectivement un convertisseur élévateur de tension et lesquelles unités d'équilibrage formant un circuit d'équilibrage (1) pour la symétrisation de la tension des accumulateurs d'énergie (2), et
les unités d'équilibrage (6) étant connectées de telle sorte que, lorsqu'une symétrisation de la tension est effectuée, elles prennent de l'énergie à l'accumulateur d'énergie (2) attribué et l'amènent avec élévation de la tension au montage en série des accumulateurs d'énergie (2), et
les accumulateurs d'énergie (2) étant des condensateurs et/ou des ultracondensateurs.

2. Système d'entraînement selon la revendication 1,
**caractérisé en ce que**
le circuit d'équilibrage (1) présente des unités de commande (18), lesquelles entraînent l'exécution de la prise d'énergie sur ceux parmi les accumulateurs d'énergie (2) dont la tension dépasse une valeur de seuil.

3. Système d'entraînement selon la revendication 1 ou 2,
**caractérisé en ce que**
le circuit d'équilibrage (1) est monté de telle sorte qu'une prise d'énergie a lieu à partir de plusieurs, en particulier de tous les accumulateurs d'énergie (2), la symétrisation étant obtenue par le fait qu'une charge plus importante est prise sur les accumulateurs d'énergie (2) avec tension plus élevée que sur ceux avec tension plus basse.

4. Système d'entraînement selon l'une des revendications 1 à 3,
**caractérisé en ce que**
le montage en série du circuit d'équilibrage (1) comprend plus de deux accumulateurs d'énergie (2).

5. Système d'entraînement selon l'une des revendications 1 à 4,
**caractérisé en ce que**
les convertisseurs élévateurs de tension (6) sont des convertisseurs de tension cadencés, en particulier des convertisseurs flyback.

6. Système d'entraînement selon l'une des revendications 1 à 5,
**caractérisé en ce que**
les convertisseurs élévateurs de tension (6) sont connectés en parallèle.

7. Procédé pour la symétrisation de la tension de plusieurs accumulateurs d'énergie (2) connectés en série sur un système d'entraînement d'un véhicule à moteur,
des convertisseurs élévateurs de tension (6) étant attribués aux accumulateurs d'énergie (2), lesquels sont formés comme condensateurs et/ou comme ultracondensateurs, lesquels convertisseurs prennent de l'énergie aux accumulateurs d'énergie (2) lorsqu'une symétrisation de la tension est effectuée et l'amènent avec élévation de la tension au montage en série des accumulateurs d'énergie (2).

8. Procédé selon la revendication 7,
**caractérisé en ce que**
de l'énergie est prise à ceux d'entre les accumulateurs d'énergie (2) dont la tension dépasse une valeur de seuil.

9. Procédé selon la revendication 7 ou 8,
**caractérisé en ce qu'**
une prise d'énergie est effectuée à partir de plusieurs, en particulier de tous les accumulateurs d'énergie (2), même lorsque ceux-ci n'ont pas une tension surélevée, la symétrisation étant obtenue par le fait que plus d'énergie est prise aux accumulateurs d'énergie (2) avec tension plus élevée qu'à ceux avec tension plus faible.

10. Procédé selon l'une des revendications 7 à 9,
**caractérisé en ce que**,
dans la symétrisation, plus de deux accumulateurs d'énergie (2) sont inclus.

11. Procédé selon l'une des revendications 7 à 11,
**caractérisé en ce que**,
pour les convertisseurs élévateurs de tension (6), des convertisseurs de tension cadencés, en particulier des convertisseurs flyback sont employés.

12. Procédé selon l'une des revendications 7 à 12,
**caractérisé en ce que**
les convertisseurs élévateurs de tension (6) sont opérés en circuit en parallèle.
